# EUROPÄISCHE PATENTSCHRIFT

(11) **EP 2 917 011 B1**
(45) Veröffentlichungstag und Bekanntmachung des Hinweises auf die Patenterteilung: **12.07.2017**
(21) Anmeldenummer: 13776721.6
(22) Anmeldetag: 05.10.2013
(51) Int. Cl.: B29B 11/08, B29B 11/14, B65D 1/02, B29C 45/00

(54) **VORFORMLING UND BEHÄLTER**
PREFORM AND CONTAINER
ÉBAUCHE ET RÉCIPIENT

(30) Priorität: 07.11.2012 CH 22872012
(43) Veröffentlichungstag der Anmeldung: 16.09.2015
(73) Patentinhaber: Alpla-Werke Alwin Lehner GmbH und Co. KG, 6971 Hard (AT)
(72) Erfinder: MARIN, Dietmar, A-6858 Bildstein (AT)
(74) Vertreter: Bohest AG Branch Ostschweiz
(86) Internationale Anmeldenummer: PCT/EP2013/003002
(87) Internationale Veröffentlichungsnummer: WO 2014/072012

(56) Entgegenhaltungen:
- EP-A1- 2 100 707
- WO-A1-01/83193
- WO-A1-98/07556
- US-A- 4 928 835
- US-A1- 2009 223 920
- DATABASE WPI Week 200019 Thomson Scientific, London, GB; AN 2000-216804 XP002715774, -& JP 2000 043128 A (NISSEI ASB MACHINE CO LTD) 15. Februar 2000 (2000-02-15)

## Beschreibung

Die Erfindung betrifft einen spritzgegossenen Preform zur Herstellung von Kunststoffbehältern in einem Streckblasverfahren gemäss dem Oberbegriff des Patentanspruchs 1.

Ein grosse Zahl der heutzutage eingesetzten Kunststoffflaschen und dergleichen Kunststoffbehälter wird in einem Streckblasverfahren hergestellt. Bei diesem Verfahren wird zunächst ein sogenannter Preform von üblicherweise länglicher, röhrchenartiger Gestalt hergestellt, der an seinem einen Längsende einen Boden und am anderen Längsende einen Halsabschnitt mit Mitteln zur formschlüssigen Festlegung eines mit korrespondierenden Eingriffsmitteln ausgestatteten Verschlussteils aufweist. Die Mittel zur formschlüssigen Festlegung eines Verschlussteils sind beispielsweise an der Aussenwandung des Halsteils ausgebildete Gewindeabschnitte oder bajonettartige Vorsprünge oder Vertiefungen. Der Preform wird in eine Formkavität einer Blasform eingesetzt und durch ein mit Überdruck eingeblasenes Medium, üblicherweise Luft, aufgeblasen. Dabei wird der Preform zusätzlich mit einem durch die Halsöffnung eingefahrenen Reckdorn in axiale Richtung gereckt. Nach dem Reck-/Blasvorgang wird der fertige Kunststoffbehälter aus der Blasform entformt.

Im sogenannten Einstufen-Streckblasverfahren wird der Preform ohne dazwischen geschaltete Abkühlung und Lagerung unmittelbar nach seiner Herstellung im Spritzgiessverfahren zu einem Kunststoffbehälter umgeformt. Meist jedoch werden die Kunststoffbehälter in einem Zweistufen-Streckblasverfahren hergestellt, bei dem zunächst die Preforms spritzgegossen, abgekühlt und für die spätere Verwendung zwischengelagert werden. Die Herstellung der Kunststoffbehälter erfolgt räumlich und zeitlich getrennt in einem separaten Streckblasverfahren. Beim diesem späteren Streckblasverfahren werden die Preforms wieder erwärmt, um daraus Kunststoffflaschen herzustellen. Beispielsweise wird dazu mit Hilfe von Infrarotstrahlung über die axiale und/oder radiale Erstreckung des Preforms ein gewünschtes Temperaturprofil eingestellt, welches für den Streckblasverfahren erforderlich ist. Nach dem Einsetzen des Preforms in das Formwerkzeug wird dieser mittels eines mit Überdruck eingeblasenen Gases radial ausgeformt und dabei mit einer Reckstange in axiale Richtung verstreckt. Danach wird der fertige Kunststoffbehälter entformt.

Bei der Herstellung von Massenartikeln, wie beispielsweise Kunststoffflaschen aus Polyethylenterephthalat (PET), stellt der Materialeinsatz einen entscheidenden Faktor für die Wettbewerbsfähigkeit und die Ökobilanz dar. Durch die sehr hohen Stückzahlen, in denen Kunststoffflaschen hergestellt werden, können Reduktionen des Materialgewichts im Zehntelgrammbereich sehr schnell zu Materialeinsparungen im Tonnenbereich führen. Daher wurden in der Vergangenheit grosse Anstrengungen unternommen, das Materialgewicht der Preforms für Kunststoffflaschen, insbesondere PET-Flaschen, zu verringern. Mit den aus dem Stand der Technik bekannten Preforms glaubte man, das Optimum erreicht zu haben, mussten die aus den Preforms hergestellten Kunststofflaschen ja auch die geforderten mechanischen Festigkeiten, Temperaturstabilitäten und Gasbarriereeigenschaften erreichen. Nachteilig an den bisherigen Anstrengungen zur Reduktion des Materialgewichts ist, dass diese vielfach Modifikationen der Streckblasvorrichtungen und der Abfüllanlagen erforderten. Dies ist sowohl aus Sicht der Betreiber von Streckblasvorrichtungen als auch aus Sicht der Abfüller von aus den Preforms hergestellten Kunststoffbehältern ein äusserst unbefriedigender Zustand.

Aus dem Stand der Technik sind Preforms mit unterschiedlichen Mindestwandstärken im Halsabschnitt bekannt, siehe dazu EP2100707, JP2000043128, WO9807556, WO0183193, US2009223920, WO2011160748 und US4928835. Diese Wandstärken sind erforderlich, um dem Halsabschnitt, der beim Streckblasverfahren ja nicht weiter streckverfestigt wird, die für die Aufnahme des Verschlussteils erforderliche mechanische Festigkeit, die Gasdichtigkeit und die Innendruckfestigkeit auch bei erhöhten Aussentemperaturen zu verleihen. Der Halsabschnitt des Preforms trägt somit nicht unerheblich zum Gesamtgewicht und damit zum Materialeinsatz der Preforms bei.

Aufgabe der vorliegenden Erfindung ist es daher, einen Preform für die Herstellung von beliebigen Kunststoffbehältern, beispielsweise Kunststoffflaschen, in einem Streckblasverfahren dahingehend zu verbessern, dass der Materialeinsatz noch weiter reduziert werden kann. Der Preform soll im Spritzgiessverfahren massentechnisch herstellbar sein und soll für die Verarbeitung auf herkömmlichen Streckblasvorrichtungen geeignet sein. Dabei sollen Modifikationen an den Streckblasvorrichtungen und an den Abfüllanlagen vermieden werden können. Die geforderten mechanischen Festigkeiten, die Gasdichtigkeit und Innendruckfestigkeit und die thermische Stabilität der aus den Preforms gefertigten Kunststoffbehälter sollen gewährleistet bleiben.

Die Lösung dieser Aufgaben besteht in einem spritzgegossenen Preform zur Herstellung von Kunststoffbehältern, insbesondere Kunststoffflaschen, in einem Streckblasverfahren, welcher die in Patentanspruch 1 aufgelisteten Merkmale aufweist. Weiterbildungen und/oder vorteilhafte Ausführungsvarianten der Erfindung sind Gegenstand der abhängigen Patentansprüche.

Durch die Erfindung wird ein spritzgegossener Preform zur Herstellung von Kunststoffbehältern, insbesondere Kunststoffflaschen, in einem Streckblasverfahren geschaffen, der einen im wesentlichen länglichen Preformkörper aufweist, dessen eines Längsende geschlossen ausgebildet ist. An seinem gegenüberliegenden Längsende schliesst an den Preformkörper ein mit einer Ausgiessöffnung versehener Halsabschnitt an, an dessen Aussenwandung Befestigungsmittel zur formschlüssigen Festlegung eines mit korrespondierenden Eingriffsmitteln ausgestatteten Verschlussteils ausgebildet sind. Der Halsabschnitt weist wenigstens eine, wenigstens bereichsweise umlaufende Engstelle auf, die eine Wandstärke von 0,4 mm bis 0,8 mm besitzt. Das spritzgegossene Kunststoffmaterial liegt zumindest an der wenigstens einen Engstelle in einem hochorientierten, durch einen Spritzgußprozess erzeugten wenigstens teilweise kristallinen Zustand vor.

Überraschenderweise wird der Halsabschnitt des Preforms durch die Engstellen bzw. dünnwandigen Bereiche nicht geschwächt. Vielmehr erfahren die Molekülketten des Kunststoffmaterials an den Engstellen eine hochorientierte Ausrichtung. Zwischen den orientierten Molekülketten treten zwischenmolekulare Kräfte auf, die zu einer erhöhten Steifigkeit und Zugfestigkeit führen. Die Molekülketten richten sich zueinander aus und nähern sich einander an. Dies führt zu einer messbaren Erhöhung der Dichte. Bei einer Erhöhung der Dichte über einen vorbestimmten Wert können die optischen Eigenschaften der Engstellen verändert werden. In die Engstellen einfallendes Licht kann dadurch intensiver gestreut werden, so dass diese Engstellen trüb oder milchig erscheinen können.

Für die Definitionen der vorliegenden Erfindung erfolgt die Bestimmung der Dichte nach dem in der Norm ASTM D 1505-10 beschriebenen Messverfahren. Dieses Messverfahren ermöglicht eine Dichtebestimmung mit einer Genauigkeit von 0,001g und weniger. Die gemessene Dichte lässt einen Rückschluss auf die Orientierung, die Kristallisation und die Festigkeit der Engstellen zu. Allerdings kann amorphes PET in Abhängigkeit von zugesetzten Copolymeren und/oder Additiven unterschiedliche Dichtewerte erreichen. Bekannt sind Werte zwischen 1,320 g/cm³ und 1,339 g/cm³.

Um trotz der dem amorphen PET zugesetzten Copolymere und/oder Additive das in der Norm ASTM D 1505-10 beschriebene Messverfahren nutzen zu können, wird im Sinne dieser Erfindung festgelegt, dass eine unterhalb des Stützrings bestimmte durchschnittliche Dichte des Preforms einen ersten Referenzwert darstellt. Falls der Preform keinen Stützring aufweisen sollte, ist die Dichte in einem Bereich des Preformkörpers zu bestimmen, der unmittelbar unterhalb des Halsabschnitts angrenzt. Vorzugsweise wird die Dichte an wenigstens drei voneinander verschiedenen Messpunkten entlang eines Umfangs des Preforms ermittelt und hiervon die durchschnittliche Dichte ermittelt. Unabhängig von einer möglicherweise tatsächlich vorhandenen Kristallisation wird im Sinne dieser Erfindung definiert, dass an der bzw. den Messposition(en), an der bzw. denen der erste Referenzwert bestimmt worden ist, keine Kristallisation vorliegt, also der Kristallisationsgrad 0% beträgt. Ferner wird im Sinne dieser Erfindung ein zweiter Referenzwert festgelegt, der um 0,120 g/cm³ grösser ist als der erste ermittelte Referenzwert. Dieser zweite Referenzwert entspricht definitionsgemäß einem Kristallisationsgrad von 100%. Die zwischen den beiden Referenzwerten liegenden Kristallisationsgrade sind direkt proportional zu den ermittelten Dichtewerten.

Beispielsweise wird als erstet Referenzwert eine durchschnittliche Dichte von 1,330 g/cm³ ermittelt. Entsprechend der obigen Definition entspricht diese durchschnittliche Dichte einem Kristallisationsgrad von 0%. Definitionsgemäss liegt der Kristallisationsgrad von 100% bei einer Dichte von 1,450 g/cm³, welche den zweiten Referenzwert darstellt. Wegen der direkten Proportionalität zwischen den Dichtewerten und den Kristallisationsgraden beträgt der Kristallisationsgrad bei einer Dichte von 1,360 g/cm³ dann 25%, bei einer Dichte von 1,390 g/cm³ 50% und bei einer Dichte von 1,420 g/cm³ 75%.

Die Kristallisation erfolgt im wesentlichen nur an der Engstelle im Halsabschnitt. In der Regel kommt es an den am Halsabschnitt angeordneten Befestigungsmitteln zur Festlegung von Verschlüssen zum Verschließen der Ausgießöffnung zu keiner Kristallisation, da die Wandstärken im Bereich dieser Befestigungsmittel in der Regel größer als 0,4 mm bis 0,8 mm sind.

Die Erfindung macht sich den Effekt zunutze, dass eine Kunststoffschmelze, die durch sehr dünnwandige Bereiche gepresst wird, in diesen Bereichen eine Streckverfestigung erfährt und in einem hochorientierten, durch einen Spritzgußprozess erzeugten wenigstens teilweise kristallinen Zustand vorliegt. Der beispielsweise über Dichtebestimmungen ermittelbare Kristallisationsgrad des Kunststoffmaterial ist zumindest an den Engstellen sehr hoch. Als hochorientierter Zustand wird gemäss der Erfindung ein über Dichtebestimmungen ermittelbarer Orientierungsgrad angesehen, der wenigstens 3% beträgt. Der hochorientierte Zustand des Kunststoffmaterials an den Engstellen des Halsabschnitts führt oft auch zu einer sehr starken optischen Anisotropie des Kunststoffmaterials, die bei transparenten Kunststoffen vielfach zu einer Eintrübung oder weissen Verfärbung der Engstellen führen kann. Diese Eintrübungen und Verfärbungen werden bewusst in Kauf genommen. Sie spielen am Halsabschnitt des Preforms bzw. des daraus hergestellten Kunststoffbehälters in der Regel auch keine Rolle, da sie üblicherweise ohnehin durch das aufgebrachte Verschlussteil verdeckt sind. Durch das gezielte Vorsehen einer oder mehrerer wenigstens bereichsweise umlaufender Engstellen kann im Halsabschnitt des Preforms Kunststoffmaterial eingespart werden. Da der Preform konstruktiv keine Veränderungen erfährt, ist er auf den üblichen Streckblasvorrichtungen verarbeitbar bzw. ist ein daraus hergestellter Kunststoffbehälter ohne Modifikationen auf bekannten Abfülleinrichtungen transportier- und befüllbar.

Der Kristallisationsgrad kann natürlich auch höher als 3% sein. Gemäß einer Ausführungsvariante der Erfindung beträgt der Kristallisationgrad etwa 5% bis etwa 7%. Gemäß einem weiteren Ausführungsbeispiel der Erfindung beträgt der Kristallisationgrad etwa 7% bis etwa 9%. Je höher der Kristallisationsgrad ist, desto höher wird auch die Festigkeit bei gleicher Dicke oder Wandstärke der Engstelle sein. Somit ist es möglich, mittels eines grö-ßeren Kristallisationsgrads bei gleicher Festigkeit dünnere Wandstärken an der Engstelle zu realisieren. Beispielsweise können die Festigkeit und eine damit verbundene Belastbarkeit bei gleichem Material identisch sein zwischen einer ersten Engstelle mit einer ersten Wandstärke von 0,6 mm und einem ersten Kristallisationsgrad von 5% und einer zweiten Engstelle mit einer zweiten Wandstärke von 0,4 mm und einem zweiten Kristallisationsgrad von 8%.

Die Herstellung des Preforms erfolgt auf einer Spritzgussanlage. Dabei wird der Preform aus einer Schmelze aus Kunststoffmaterial bei Spritzdrücken von 1500 bar bis 4000 bar, gemessen am Schmelzespeicher oder bei Spritzgussanlagen ohne Schmelzespeicher direkt an der Schneckenspritze, spritzgegossen. Das Kunststoffmaterial wird dabei nicht als dünnflüssige Schmelze vorgelegt, sondern es weist eine Viskosität auf, die derjenigen der Kunststoffmaterialien für konventionelle, bekannte Preforms entspricht.

Durch dieses Fertigungsverfahren unterscheidet sich der vorgeschlagene Preform von einem bekannten Preform für das Hot Fill Verfahren, dessen gesamter Hals in einer der Spritzgussanlage nachgeschalteten Anlage einer Hitzebehandlung unterzogen wird. Bei diesem bekannten Verfahren wird der gesammte Hals des Preforms kristallisiert und so die Dichte, sowie die thermischen und mechanischen Eigenschaften erhöht. Durch dieses bekannte Verfahren wird jedoch kein Kunststoffmaterial eingespart.

Der Preform besteht aus einem Kunststoffmaterial das wenigstens ein Polymer aus der Gruppe bestehend aus Polyester, Polyethylenterephthalat und Polyethylenterephthalat-Copolymeren aufweist.

Je nach den Anforderungen kann das Kunststoffmaterial zusätzlich auch Farbstoffe und/oder Füllstoffe und/oder Gleitmittel und/oder Additive auf Erdöl- oder biologischer Basis aufweisen. Der Preform besteht aus einem Kunststoffmaterial, das im wesentlichen Polyethylenterephthalat (PET) aufweist. An der wenigstens einen Engstelle weist das PET einen Kristallisationsgrad auf, der gleich oder grösser 3% ist, wobei der Kristallisationsgrad bei einer Intrinsischen Viskosität von 0,78 dl/g bis 0,84 dl/g bestimmt wird, die nach ISO 1628-5 gemessen ist. Das Lösungsmittel zum Lösen des PET zur Bestimmung der Intrinsischen Viskosität kann beispielsweise ein Gemisch aus Phenol und 1,2-Dichlorbenzol im Mischungsverhältnis 1:1 sein. Die Messtemperatur beträgt etwa 25°C. Die Viskositätsmessung und deren Umrechnung erfolgt beispielsweise gemäss der Methode, die in dem Artikel "Clarification of Viscosity Measurements of PET" von PlasticsEurope beschrieben und auf der Internetseite von PlasticsEurope unter http://www.plasticseurope.org/Documents/Document/20100301163022-Clarification Viscosity Measurements PET-20070402-002-EN-v1.pdf verfügbar ist.

Ein Kunststoffbehälter, der in einem Streckblasverfahren aus einem erfindungsgemäss ausgebildeten spritzgegossenen Preform hergestellt ist, weist einen Körperabschnitt und einen damit verbundenen Behälterhals auf, dessen Geometrie im wesentlichen derjenigen des Preforms entspricht. Der Behälterhals weist auch mechanische, thermische und Barriere-Eigenschaften auf, die im wesentlichen denjenigen des Halsabschnitts des Preforms entsprechen. Dies ergibt sich daraus, dass der Halsabschnitt des Preforms beim Streckblasverfahren im wesentlichen unverändert bleibt. Üblicherweise ragt der Halsabschnitt des Preforms aus der Kavität des Blasformwerkzeugs und bleibt daher vom Streckblasverfahren unbeeinträchtigt. Die am Halsabschnitt des Preforms ausgebildeten Geometrien und Eigenschaften liegen daher praktisch identisch auch am Behälterhals vor.

Die mechanischen und thermischen Eigenschaften des Behälterhalses des Kunststoffbehälters sind derart eingestellt, dass der Behälterhals bei einer 24 Stunden dauernden Innendruckbelastung von 4 bar und einer Temperatur von 38°C +/- 1°C eine Innendurchmessererweiterung aufweist, die kleiner oder gleich 1 % des Innendurchmessers ohne Innendruckbelastung ist.

In einer weiteren Ausführungsvariante der Erfindung sind die mechanischen und thermischen Eigenschaften des Behälterhalses derart, dass er bei einer 24 Stunden dauernden Innendruckbelastung entsprechend einer Karbonisierung des Füllinhalts von 4 g/l bis 9 g/l und einer Temperatur von 38°C +/- 1°C eine Innendurchmessererweiterung aufweist, die kleiner oder gleich 1 % des Innendurchmessers ohne Innendruckbelastung ist. Bei diesen Eigenschaften ist sichergestellt, dass der Kunststoffbehälter auch insbesondere in den Sommermonaten auftretende erhöhte Temperaturen ohne nennenswerte Deformation des Behälterhalses übersteht.

In einer weiteren Ausführungsvariante des Kunststoffbehälters sind die Eigenschaften des Behälterhalses derart eingestellt, dass dieser bei einer Temperatur von 50°C bis 55°C und einer 3 Sekunden dauernden Belastung mit 200N eine axiale Längskontraktion von weniger als 0,5% aufweist. Durch diese Einstellung der Eigenschaft des Kunststoffhalses wird weitestgehend vermieden, dass der Kunststoffhals während des Blasprozesses durch die Blasdüse deformiert wird.

Weitere Vorteile und Merkmale ergeben sich aus der nachfolgenden Beschreibung eines Ausführungsbeispiels der Erfindung unter Bezugnahme auf die schematischen Zeichnungen.
- Fig. 1: zeigt einen axial halbseitig geschnittenen Preform mit einem erfindungsgemäss ausgebildeten Halsabschnitt; und
- Fig. 2: zeigt ein beispielsweises Diagramm zur Erläuterung des Zusammenhangs zwischen Dichte und Kristallisationsgrad.

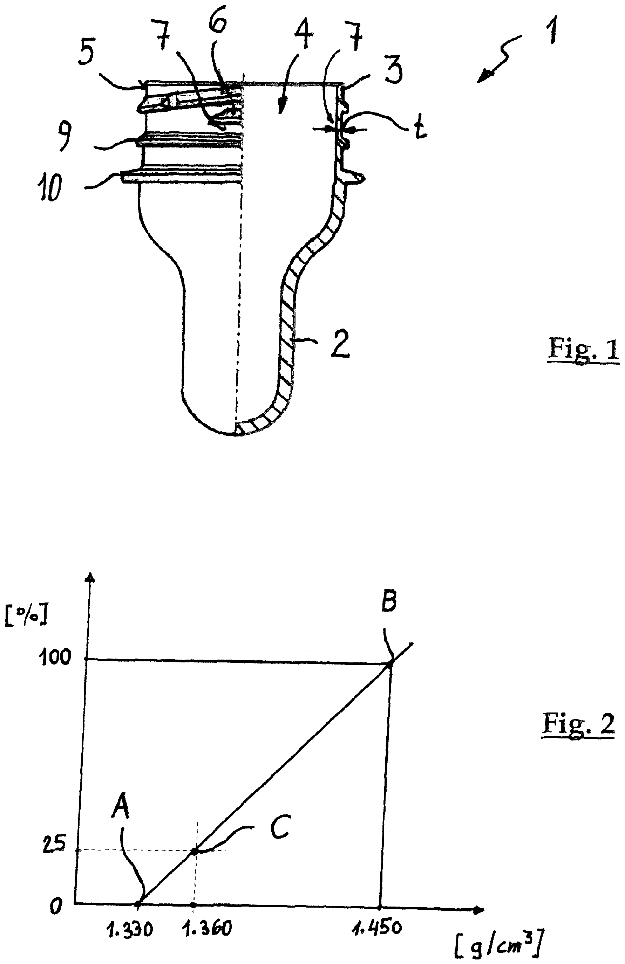

Fig. 1 zeigt einen halbseitig axial geschnitter Preform gemäss der Erfindung, der gesamthaft das Bezugszeichen 1 trägt. Der Preform 1 weist einen länglichen Preformkörper 2 auf, dessen eines Längsende verschlossen ausgebildet ist. An seinem entgegengesetzten Ende schliesst der Preformkörper 2 an einen Halsabschnitt 3 an, der mit einer Ausgiessöffnung 4 versehen ist. Der Halsabschnitt 3 ist an seiner Aussenwandung 5 mit Befestigungsmitteln 6 versehen, die zur formschlüssigen Festlegung eines nicht näher dargestellten Verschlussteils mit korrespondierend ausgebildeten Eingriffsmitteln dienen. Gemäss dem dargestellten Ausführungsbeispiel sind die Befestigungsmittel 6 als Gewindeabschnitte ausgebildet, welche formschlüssig mit dem Innengewinde eines Schraubverschlusses zusammenwirken. Der Preform 1 kann ein- oder mehrschichtig ausgebildet sein. In Frage kommen alle für das Spritzgiess- und Streckblasverfahren geeigneten Kunststoffmaterialien, beispielsweise Polyester, Polyethylenterephthalat und Polyethylenterephthalat-Copolymere. Je nach den Anforderungen an den aus dem Preform herzustellenden Kunststoffbehälter kann das Kunststoffmaterial zusätzlich auch Farbstoffe und/oder Füllstoffe und/oder Gleitmittel und/oder Additive auf Erdöl- oder biologischer Basis umfassen.

Der Preform 1 kann, wie dargestellt, konventionell mit einem Supportring 10 ausgestattet sein, der am Übergang vom Preformkörper 2 zum Halsabschnitt 3 etwa radial abragt. Zwischen den als Gewindeabschnitte ausgebildeten Befestigungsmitteln 6 und dem Supportring 10 kann auch noch ein sogenannter Schnappring 9 ausgebildet sein, der am fertig streckgeblasenen Kunststoffbehälter beispielsweise als ein Widerlager für einen Garantieverschluss dient. Derartige Garantieverschlüsse sind beispielsweise von Getränkeflaschen hinlänglich bekannt. Beim Abschrauben des Garantieverschlusses wird ein ringförmiger Abschnitt des Garantieverschlusses, für den der Schnappring ein Widerlager bildet, wenigstens teilweise vom übrigen Verschluss abgetrennt. Dadurch wird dem Verbraucher auch bei wieder verschlossener Flasche angezeigt, dass die Flasche bereits einmal geöffnet worden ist. Der Schnappring 9 kann bei Ölflaschen oder dergleichen aber auch zur Festlegung des unteren Teils des üblicherweise verwendeten Scharnierverschlusses dienen. In einer nicht näher dargestellten Ausführungsvariante kann der Preform auch ohne Supportring ausgebildet sein.

Der Halsabschnitt weist wenigstens eine Engstelle 7 auf, die sich wenigstens bereichsweise über den Umfang erstreckt. Gemäss dem dargestellten Ausführungsbeispiel ist die Engstelle 7 zwischen dem Schnappring 9 und dem Auslauf der Gewindeabschnitte 6 vorgesehen. An der Engstelle 7 weist der Halsabschnitt 3 eine Wandstärke t auf, die 0,4 mm bis 0,8 mm beträgt. Das Kunststoffmaterial ist wenigstens an der Engstelle hochorientiert und durch den Spritzgussprozess zumindest teilweise kristallin, wodurch die mechanische und thermische Festigkeit des Halsabschnitts erhöht ist. Gemäss der vorliegenden Erfindung bedeutet der Begriff hochorientiert, dass das spritzgegossene Kunststoffmaterial einen über eine Dichtebestimmungen ermittelbaren Kristallisationsgrad besitzt, der wenigstens 3% beträgt. Der Halsabschnitt 3 des Preforms 1 kann auch noch weitere Engstellen aufweisen, die wiederum wenigstens bereichsweise umlaufend ausgebildet sind. Beispielsweise können die weiteren Engstellen zwischen den Gewindeabschnitten oder im Bereich zwischen dem Schnappring und dem Supportring vorgesehen sein. Die Engstellen können unterschiedliche Wandstärken aufweisen, je nachdem, welcher Kristallisationsgrad und, damit zusammenhängend, welche thermischen und mechanischen Festigkeiten im jeweiligen Bereich des Preformhalses angestrebt werden. In jedem Fall weisen die Engstellen jedoch Wandstärken auf, die von 0,4 mm bis 0,8 mm betragen.

In Fig. 2 ist ein kartesisches Koordinatensystem dargestellt, auf dessen Abszissenachse die Dichte in [g/cm³] und auf der Ordinatenachse der Kristallisationsgrad in [%] aufgetragen sind. Die Dichte des im wesentlichen aus Polyethylenterephthalat bestehenden Preforms wird gemäss dem in der Norm ASTM D 1505-10 beschriebenen Messverfahren bestimmt. Der eingetragene durchschnittliche Wert der Dichte von 1,330 g/cm³ wird aus drei unmittelbar unterhalb des Supportrings 10 befindlichen Messstellen ermittelt. Dieser Wert stellt einen ersten Referenzwert A dar. Definitionsgemäß beträgt bei diesem Dichtewert der Kristallisationsgrad 0%; dies unabhängig von allfällig bestehenden tatsächlichen Kristallisation. Ein zweiter Referenzwert B ergibt sich, indem zu dem ersten Referenzwert für die Dichte der Wert 0,120 g/cm³ addiert wird. An diesem zweiten Referenzwert B, an dem die Dichte 1,450 g/cm³ beträgt, beträgt der Kristallisationsgrad gemäss Definition 100%. Sämtliche zwischen diesen beiden Referenzwerten A, B befindliche Kristallisationsgrade sind direkt proportional zu den ermittelten Dichtewerten. Die Dichte wird bei einer Intrisischen Viskosität von 0,78 dl/g bis 0,84 dl/g, gemessen nach ISO 1628-5, bestimmt. Bei dem in dem Diagramm wiedergegebenen Ausführungsbeispiel beträgt die gemessene Dichte an der Engstelle beispielsweise 1,360 g/cm³. Daraus ergibt sich ein Kristallisationsgrad von 25%, der im Diagramm in Fig. 2 mit dem Punkt C angedeutet ist.

Das Vorsehen von gezielten Engstellen im Halsabschnitt des Preforms führt zu einer Einsparung von Kunststoffmaterial. Die eingesetzten Kunststoffmaterialien werden für das Spritzgiessverfahren nicht als dünnflüssige Schmelze vorgelegt, sondern weisen Viskositäten auf, die vergleichbar zu den Viskositäten sind, welche die Kunststoffmaterialien für die Herstellung der aus dem Stand der Technik bekannten, spritzgegossenen Preforms besitzen. Die Herstellung des Preforms erfolgt auf Spritzgussanlagen aus einer Schmelze aus Kunststoffmaterial bei Spritzdrücken von 1500 bar bis 4000 bar, gemessen am Schmelzespeicher oder bei Spritzgussmaschinen ohne Schmelzespeicher direkt an der Schneckenspritze. Die Reduktion des Gewichts im Halsabschnitt des Preforms - ohne dabei an Festigkeit zu verlieren - hat auch den Vorteil, dass ein Schwerpunkt des Preforms sich weiter vom Halsteil weg, in Richtung des Preformkörpers verlagert. Dadurch kann ein bessere Ausrichtung der Preforms erreicht werden. Werden die Preforms nach ihrer Fertigung beispielsweise in Transportbehälter verpackt, so sorgt die Verlagerung des Schwerpunkts in Richtung des Preformkörpers dazu, dass sie mit dem Preformkörper voran in den Behälter gelangen. Die aufgrund der Gewichtsreduktion im Halsabschnitt erzielte Verlagerung des Schwerpunkts des Preforms in Richtung des Preformkörpers erweist sich schliesslich auch bei der Einspeisung und beim Transport der Preforms in der Streckblasanlage von Vorteil, da sie mit einer viel grösseren Wahrscheinlichkeit lagegenau, d.h. mit dem Preformkörper nach unten ausgerichtet, zur Blasform gelangen. Dadurch kann der Aufwand für die korrekte Ausrichtung der Preforms reduziert werden. Nachdem der Halsabschnitt des Preforms beim nachfolgenden Streckblasverfahren nicht weiter verändert wird - vielfach ragt der Halsabschnitt beim Streckblasverfahren aus der Formkavität des Blasformwerkzeugs - weist auch ein aus dem erfindungsgemässen Preform hergestellter Kunststoffbehälter in seinem Behälterhals die mechanischen und thermischen Eigenschaften bzw. die Barriere-eigenschaften auf, die bereits beim Spritzgiessen des Preforms eingestellt worden sind.

## Patentansprüche

1. Spritzgegossener Preform zur Herstellung von Kunststoffbehältern, insbesondere Kunststoffflaschen, in einem Streckblasverfahren mit einem im wesentlichen länglichen Preformkörper (2), dessen eines Längsende geschlossen ausgebildet ist und der an seinem gegenüberliegenden Längsende an einen mit einer Ausgiessöffnung (4) versehenen Halsabschnitt (3) anschliesst, an dessen Aussenwandung (5) Befestigungsmittel (6) zur formschlüssigen Festlegung eines mit korrespondierenden Eingriffsmitteln ausgestatteten Verschlussteils ausgebildet sind, **dadurch gekennzeichnet, dass** der Halsabschnitt (3) wenigstens eine wenigstens bereichsweise umlaufende Engstelle (7) aufweist, die eine Wandstärke (t) von 0,4 mm bis 0,8 mm besitzt, und dass das spritzgegossene Kunststoffmaterial zumindest an der wenigstens einen Engstelle (7) in einem hochorientierten, durch einen Spritzgußprozess erzeugten wenigstens teilweise kristallinen Zustand vorliegt, wobei das Kunststoffmaterial im wesentlichen Polyethylenterephthalat aufweist und an der wenigstens einen Engstelle einen Kristallisationsgrad aufweist, der gleich oder grösser als 3% ist, wobei der Kristallisationsgrad über Dichtemessungen nach der Norm ASTM D 1505-10 bei einer Intrinsischen Viskosität von 0,78 dl/g bis 0,84 dl/g bestimmt wird, die nach ISO 1628-5 gemessen ist.

2. Preform nach Anspruch 1, **dadurch gekennzeichnet, dass** er aus einer Schmelze aus Kunststoffmaterial bei Spritzdrücken von 1500 bar bis 4000 bar, gemessen am Schmelzespeicher oder bei Spritzgussmaschinen ohne Schmelzespeicher direkt an der Schneckenspritze, spritzgegossen ist.

3. Preform nach einem der vorangehenden Ansprüche, **dadurch gekennzeichnet, dass** das Kunststoffmaterial wenigstens ein Polymer aus der Gruppe bestehend aus Polyester, Polyethylenterephthalat und Polyethylenterephthalat-Copolymeren aufweist.

4. Preform nach einem der vorangehenden Ansprüche, **dadurch gekennzeichnet, dass** das Kunststoffmaterial Farbstoffe und/oder Füllstoffe und/oder Gleitmittel und/oder Additive auf Erdöl- oder biologischer Basis aufweist.

5. Preform nach Anspruch 1, **dadurch gekennzeichnet, dass** der Kristallisationsgrad an der wenigstens einen Engstelle (7) 5% bis 7% beträgt.

6. Preform nach Anspruch 1, **dadurch gekennzeichnet, dass** der Kristallisationsgrad an der wenigstens einen Engstelle (7) 7% bis 9% beträgt.

7. Preform nach einem der vorangehenden Ansprüche, **dadurch gekennzeichnet, dass** der Halsabschnitt (3) mehrere wenigstens bereichsweise umlaufende Engstellen (7) aufweist, die jeweils eine Wandstärke (t) von 0,4 mm bis 0,8 mm besitzen.

8. Preform nach Anspruch 7, **dadurch gekennzeichnet, dass** der Halsabschnitt (3) wenigstens an einigen der Engstellen (7) eine unterschiedliche Wandstärke (t) aufweist.

9. Kunststoffbehälter hergestellt in einem Streckblasverfahren aus einem spritzgegossenen Preform (1) nach einem der vorangehenden Ansprüche, mit einem Körperabschnitt und einem damit verbundenen Behälterhals, dessen Geometrie im wesentlichen derjenigen des Preforms (1) entspricht, wobei der Behälterhals mechanische, thermische und Barriere-Eigenschaften aufweist, die im wesentlichen denjenigen des Halsabschnitts (3) des spritzgegossenen Preforms (1) entsprechen.

10. Kunststoffbehälter nach Anspruch 9, **dadurch gekennzeichnet, dass** der Behälterhals bei einer 24 Stunden dauernden Innendruckbelastung von 4 bar und einer Temperatur von 38°C +/- 1°C eine Innendurchmessererweiterung aufweist, die kleiner oder gleich 1 % des Innendurchmessers ohne Innendruckbelastung ist.

11. Kunststoffbehälter nach Anspruch 9, **dadurch gekennzeichnet, dass** der Behälterhals bei einer 24 Stunden dauernden Innendruckbelastung entsprechend einer Karbonisierung des Füllinhalts von 4 g/l bis 9 g/l und einer Temperatur von 38°C +/-1°C eine Innendurchmessererweiterung aufweist, die kleiner oder gleich 1 % des Innendurchmessers ohne Innendruckbelastung ist.

12. Kunststoffbehälter nach einem der Ansprüche 9 bis 11 **dadurch gekennzeichnet, dass** der Behälterhals bei einer Temperatur von 50°C bis 55°C und einer 3 Sekunden dauernden axialen Belastung mit 200 N eine axiale Längskontraktion von weniger als 0,5% aufweist.

## Claims

1. Injection-moulded preform for the production of plastics containers, in particular plastics bottles, in a stretch blow moulding process, using an in essence elongate parison (2) which has one closed longitudinal end and which adjoins, at its opposite end, a neck section (3) provided with a pouring aperture (4), where the said neck section has, at the outer wall (5) thereof, fastening means (6) for the interlocking retention of a closure component equipped with corresponding engaging means, **characterized in that** the neck section (3) has at least one narrowed region, which extends about at least a region of its periphery, the wall thickness (t) of which is from 0.4 mm to 0.8 mm, and **in that**, at least at the at least one narrowed region (7), the injection-moulded plastics material is present in a highly oriented, at least to some extent crystalline state produced by an injection-moulding process, where the plastics material in essence comprises polyethylene terephthalate and at the at least one narrowed region its degree of crystallization is greater than or equal to 3%, where the degree of crystallization is determined by way of density measurements in accordance with the standard ASTM D1505-10 with an intrinsic viscosity from 0.78 dl/g to 0.84 dl/g measured in accordance with ISO 1628-5.

2. Preform according to Claim 1, **characterized in that** it has been injection-moulded from a melt made of plastics material at injection pressures of from 1500 bar to 4000 bar, measured at the melt accumulator or, in the case of injection-moulding machines without melt accumulators, directly at the screw injection unit.

3. Preform according to any of the preceding claims, **characterized in that** the plastics material comprises at least one polymer from the group consisting of polyester, polyethylene terephthalate and polyethylene terephthalate copolymers.

4. Preform according to any of the preceding claims, **characterized in that** the plastics material comprises dyes and/or fillers and/or lubricants and/or additives based on petroleum or from a biological source.

5. Preform according to Claim 1, **characterized in that** the degree of crystallization at the at least one narrowed region (7) is from 5% to 7%.

6. Preform according to Claim 1, **characterized in that** the degree of crystallization at the at least one narrowed region (7) is from 7% to 9%.

7. Preform according to any of the preceding claims, **characterized in that** the neck section (3) has a plurality of narrowed regions (7),which extend about at least a region of its periphery, the wall thickness (t) of each of these being from 0.4 mm to 0.8 mm.

8. Preform according to Claim 7,
**characterized in that** at least at some of the narrowed regions (7) the neck section (3) has wall thicknesses (t) distinct from each other.

9. Plastics container produced in a stretch blow moulding process from an injection-moulded preform (1) according to any of the preceding claims, with a body section and, connected therewith, a container neck, the geometry of which in essence corresponds to that of the preform (1), where the container neck has mechanical, thermal and barrier properties which in essence correspond to those of the neck section (3) of the injection-moulded preform (1).

10. Plastics container according to Claim 9, **characterized in that** an internal diameter expansion of the container neck on exposure to an internal pressure loading of 4 bar and a temperature of 38°C +/- 1°C for 24 hours is less than or equal to 1% of the internal diameter in the absence of internal pressure loading.

11. Plastics container according to Claim 9, **characterized in that** an internal diameter expansion of the container neck on exposure to an internal pressure loading corresponding to carbonization of the contents at from 4 g/l to 9 g/l and a temperature of 38°C +/- 1°C for 24 hours is less than or equal to 1% of the internal diameter in the absence of internal pressure loading.

12. Plastics container according any of Claims 9 to 11, **characterized in that** an axial longitudinal contraction of the container neck on exposure to axial loading of 200 N for 3 seconds at a temperature of from 50°C to 55°C is less than 0.5%.

## Revendications

1. Ebauche moulée par injection en vue de la fabrication de récipients en matière plastique, notamment de bouteilles en matière plastique, selon un procédé d'étirage-soufflage, comprenant un corps d'ébauche (2) sensiblement allongé dont une extrémité longitudinale est réalisée sous une forme fermée et qui se raccorde avec son extrémité opposée à une partie de col (3) qui est pourvue d'une ouverture de versement (4) et sur la paroi extérieure (5) de laquelle sont réalisés des moyens de fixation (6) destinés à l'immobilisation par complémentarité de formes d'un élément de fermeture doté de moyens de prise correspondants, **caractérisée en ce que** la partie de col (3) présente au moins un rétrécissement (7) qui est périphérique au moins dans certaines zones et qui a une épaisseur de paroi (t) allant de 0,4 mm à 0,8 mm, et **en ce que**, au moins à l'endroit du rétrécissement (7), au nombre d'au moins un, la matière plastique moulée par injection est présente dans un état au moins partiellement cristallin hautement orienté, réalisé par un processus de moulage par injection, sachant que la matière plastique présente essentiellement du polyéthylène-téréphtalate et, à l'endroit du rétrécissement, au nombre d'au moins un, un degré de cristallisation qui est égal ou supérieur à 3 %, le degré de cristallisation étant déterminé par des mesures de densité selon la norme ASTM D 1505-10, pour une viscosité intrinsèque de 0,78 dl/g à 0,84 dl/g qui est mesurée selon ISO 1628-5.

2. Ebauche selon la revendication 1, **caractérisée en ce qu'**elle est moulée par injection à partir de matière plastique en fusion, à des pressions d'injection allant de 1 500 bars à 4 000 bars, mesurées sur le réservoir de matière en fusion ou, pour des machines de moulage par injection dépourvues de réservoir de matière en fusion, directement sur le dispositif d'injection à vis.

3. Ebauche selon l'une des revendications précédentes, **caractérisée en ce que** la matière plastique présente au moins un polymère du groupe comprenant le polyester, le polyéthylène-téréphtalate et des copolymères de polyéthylène-téréphtalate.

4. Ebauche selon l'une des revendications précédentes, **caractérisée en ce que** la matière plastique présente des colorants et/ou des matières de charge et/ou des agents lubrifiants et/ou des additifs à base de pétrole ou à base biologique.

5. Ebauche selon la revendication 1, **caractérisée en ce que**, à l'endroit du rétrécissement (7), au nombre d'au moins un, le degré de cristallisation est compris entre 5 % et 7 %.

6. Ebauche selon la revendication 1, **caractérisée en ce que**, à l'endroit du rétrécissement (7), au nombre d'au moins un, le degré de cristallisation est compris entre 7 % et 9 %.

7. Ebauche selon l'une des revendications précédentes, **caractérisée en ce que** la partie de col (3) présente plusieurs rétrécissements (7) qui sont périphériques au moins dans certaines zones et présentent chacun une épaisseur de paroi (t) allant de 0,4 mm à 0,8 mm.

8. Ebauche selon la revendication 7, **caractérisée en ce que** la partie de col (3) présente une épaisseur de paroi (t) différente, au moins à l'endroit de quelques-uns des rétrécissements (7).

9. Récipient en matière plastique fabriqué selon un procédé d'étirage-soufflage, à partir d'une ébauche (1) moulée par injection selon l'une des revendications précédentes, comprenant une partie de corps et un col de récipient relié à celle-ci, dont la géométrie correspond sensiblement à celle de l'ébauche (1), le col de récipient présentant des propriétés de barrière mécaniques et thermiques qui correspondent sensiblement à celles de la partie de col (3) de l'ébauche (1) moulée par injection.

10. Récipient en matière plastique selon la revendication 9, **caractérisé en ce que**, avec une charge de pression interne de 4 bars durant 24 heures et une température de 38 °C +/- 1 °C, le col de récipient présente un élargissement de diamètre intérieur qui est inférieur ou égal à 1 % du diamètre intérieur sans charge de pression interne.

11. Récipient en matière plastique selon la revendication 9, **caractérisé en ce que**, avec une charge de pression interne correspondant à une carbonatation du contenu comprise entre 4 g/l et 9 g/l, durant 24 heures, et une température de 38 °C +/- 1 °C, le col de récipient présente un élargissement de diamètre intérieur qui est inférieur ou égal à 1 % du diamètre intérieur sans charge de pression interne.

12. Récipient en matière plastique selon l'une des revendications 9 à 11, **caractérisé en ce que**, à une température allant de 50 °C à 55 °C et avec une charge axiale de 200 N durant 3 secondes, le col de récipient présente une contraction longitudinale axiale de moins de 0,5 %.
